# EUROPEAN PATENT APPLICATION

(11) **EP 4 480 825 A1**
(43) Date of publication of application: **25.12.2024**
(21) Application number: 24183543.8
(22) Date of filing: 20.06.2024
(51) Int. Cl.: B64D 27/33, B64D 31/18

(54) **FAULT DETECTION AND LOAD MANAGEMENT IN A SERIES HYBRID PROPULSION SYSTEM**

(30) Priority: 23.06.2023 US 202318340740
(71) Applicant: RTX Corporation, Farmington, CT 06032 (US)
(72) Inventor: AMARI, Martin, Farmington, 06032 (US); WU, Xin, Farmington, 06032 (US); IVES, Kyle, Farmington, 06032 (US); HAYES, Tyler W., Farmington, 06032 (US)
(74) Representative: Dehns

(57) **Abstract**

A series hybrid propulsion system (10) of an aircraft includes a gas turbine engine (12), an electrical generator (14) operably connected to the gas turbine engine (12) configured to generate electrical power from operation of the gas turbine engine (12), and one or more electrically-driven propulsors configured to provide propulsion for the aircraft, and an electrical power grid (18) configured to distribute electrical power generated at least at the electrical generator (14) to the one or more electrically-driven propulsors. A voltage regulator (20) is positioned downstream of the electrical generator (14) and is configured to take one or more actions to compensate for a loss of load on the generator (14).

## Description

### TECHNICAL FIELD

The present disclosure relates to a hybrid engine system for an aircraft, and a method of operating such a system.

### BACKGROUND

Exemplary embodiments of the present disclosur e pertain to the art of hybrid engine systems having a thermal engine, such as a gas turbine engine that is operably connected to an electrical generator to generate electrical power to be used by an aircraft. The electrical power is used to power propulsion components and any other aircraft systems.

A fault in the generator can cause a near instantaneous loss of electrical power, which in turn can cause a near instantaneous electrical fault that can rapidly propagate through the propulsion system. A delay in detecting the loss of generator power can significantly damage the propulsion system.

Additionally, an abrupt reduction in load on the aircraft electrical grid may lead to a brief overvoltage, or may unload the gas turbine engine leading to an overspeed condition. Either response may shorten the useful service life, or may cause immediate damage to the propulsion system.

### BRIEF DESCRIPTION

In one aspect of the present invention, a series hybrid propulsion system of an aircraft includes a gas turbine engine, an electrical generator operably connected to the gas turbine engine configured to generate electrical power from operation of the gas turbine engine, and one or more electrically-driven propulsors configured to provide propulsion for the aircraft, and an electrical power grid configured to distribute electrical power generated at least at the electrical generator to the one or more electrically-driven propulsors. A voltage regulator is positioned downstream of the electrical generator and is configured to take one or more actions to compensate for a loss of load on the generator.

In some embodiments of the above, the one or more actions includes applying an emergency load to the generator.

In some embodiments of any of the above, the emergency load is applied to the generator when the generator is disconnected from the power grid.

In some embodiments of any of the above, in this or other embodiments the emergency load is applied via a shunt circuit at the voltage regulator.

In some embodiments of any of the above, the loss of load is determined by measuring one of a current or a voltage at the generator.

In some embodiments of any of the above, the one or more actions includes applying a variable resistive load to the generator.

In some embodiments of any of the above, the variable resistive load is applied to the generator when one or more electrically-driven propulsors are disconnected from the electrical power grid.

In some embodiments of any of the above, the one or more electrically-driven propulsors includes a fan, and an electric motor configured to drive the fan.

In some embodiments of any of the above, a motor controller is configured to control operation of the electric motor.

In some embodiments of any of the above, an energy storage system is operably connected to the electrical power grid and is configured to store electrical power generated at the electrical generator.

In another aspect of the present invention, a method of operating a series hybrid propulsion system of an aircraft includes generating electrical power at an electrical generator via operation of a gas turbine engine operably connected to the electrical generator, and distributing the electrical power to an electrical power grid. One or more electrically-driven propulsors are operated from the electrical power provided to the electrical power grid to provide propulsion for the aircraft. The load on the electrical generator is abruptly (e.g., suddenly or instantly) reduced, and one or more actions are taken at a voltage regulator positioned downstream of the electrical generator to compensate for a loss of load on the generator.

In some embodiments of the above, the reduction in load on the electrical generator is due to the electrical generator being disconnected from the electrical power grid.

In some embodiments of any of the above, the one or more actions includes applying an emergency load to the generator.

In some embodiments of any of the above, the emergency load is applied via a shunt circuit at the voltage regulator.

In some embodiments of any of the above, the reduction of load is determined by measuring one of a current or a voltage at the generator.

In some embodiments of any of the above, the reduction in load on the electrical generator is due to one or more electrically-driven propulsors being disconnected from the electrical power grid.

In some embodiments of any of the above, the one or more actions includes applying a variable resistive load to the generator.

In some embodiments of any of the above, the one or more electrically-driven propulsors includes a fan, and an electric motor configured to drive the fan.

In some embodiments of any of the above, a motor controller is configured to control operation of the electric motor.

In some embodiments of any of the above, electrical power generated at the electrical generator is stored at an energy storage system operably connected to the electrical power grid.

### BRIEF DESCRIPTION OF THE DRAWINGS

The following descriptions should not be considered limiting in any way. With reference to the accompanying drawings, like elements are numbered alike:
FIG. 1 is a schematic illustration of a series hybrid propulsion system of an aircraft;
FIG. 2 is a schematic illustration of a series hybrid propulsion system in a fault state with the generator disconnected from the power grid;
FIG. 3 illustrates an embodiment of a generator voltage regulator;
FIG. 4 illustrates a method of operating a series hybrid propulsion system;
FIG. 5 is a schematic illustration of a series hybrid propulsion system in a fault state with one or more loads disconnected from the power grid;
FIG. 6 illustrates an embodiment of a generator voltage regulator; and
FIG. 7 illustrates another method of operating a series hybrid propulsion system.

### DETAILED DESCRIPTION

A detailed description of one or more embodiments of the disclosed apparatus and method are presented herein by way of exemplification and not limitation with reference to the Figures.

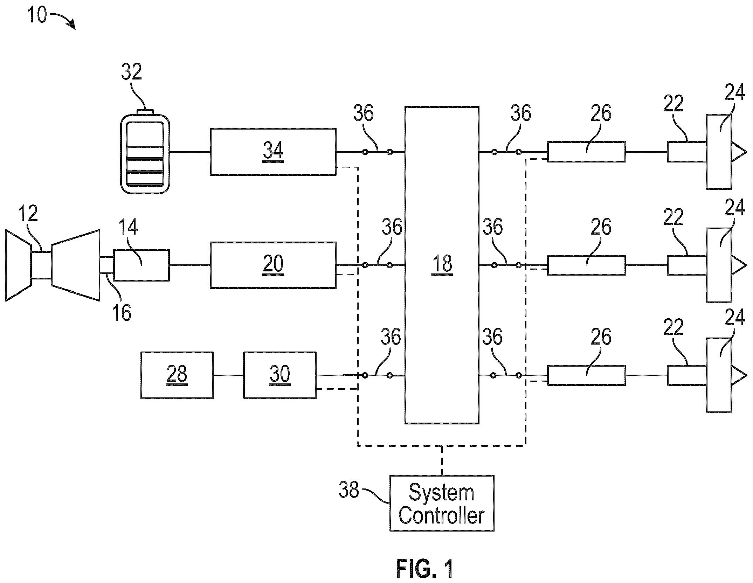

Referring to FIG. 1, illustrated is an embodiment of a series hybrid propulsion system 10 of an aircraft. The system 10 includes a gas turbine engine 12 that is operably connected to an electrical generator 14. The operation of the gas turbine engine 12 drives the generator 14, which is operably connected to the gas turbine engine 12 via, for example, an output shaft 16. The operation of the generator 14 provides electrical power for the system 10. In some embodiments, the generator 14 is a permanent magnet generator 14, in which the output voltage of the generator 14 is proportional to the input speed from the output shaft 16 into the generator 14.

The generator 14 is connected to a power grid 18 of the aircraft, which may be an alternating current (AC) power grid 18 or a direct current (DC) power grid 18. The generator 14 is connected to the power grid 18 via a generator voltage regulator 20, which in some embodiments may also include a voltage convertor, such as an active rectifier, to convert the voltage output from the generator 14. The system 10 includes one or more propulsion motors 22 connected to the power grid 18, which are driven by electrical power generated by the generator 14. The propulsion motors 22 are each connected to a propulsor, for example a fan 24 to provide a propulsive force for the aircraft. In the illustrated embodiment three propulsion motor 22 / fan 24 combinations are included, but one skilled in the art will readily appreciate that other quantities of motor 22 / fan 24 combinations, such as two, four, or more combinations, may be utilized. Operation of the propulsion motors 22 may be managed by a motor control 26 operably connected to the power grid 18 and the respective propulsion motor 22.

In addition to the propulsion motors 22, other aircraft systems 28 may be connected to the power grid 18, such as cabin environmental control systems, lighting, and other systems. A system voltage controller 30 may be used to control voltage input to the aircraft systems 28. Additionally, in some embodiments, an energy storage system, such as one or more batteries 32 and a battery voltage regulator 34 are also connected to the power grid 18 to store excess power generated by the generator 14, and distribute electrical power from the one or more batteries 32 to the power grid 18 and the motors 22 and/or additional aircraft systems 28. Each of the generator 14, the batteries 32, the aircraft systems 28, and the propulsion motors 22 are switchably connectible and disconnectible from the power grid 18 via a plurality of switches 36, which may be operated by a system controller 38.

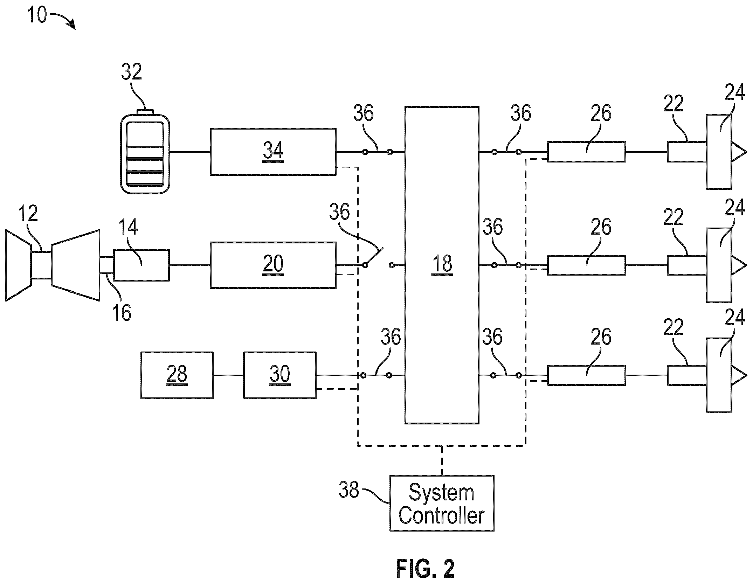

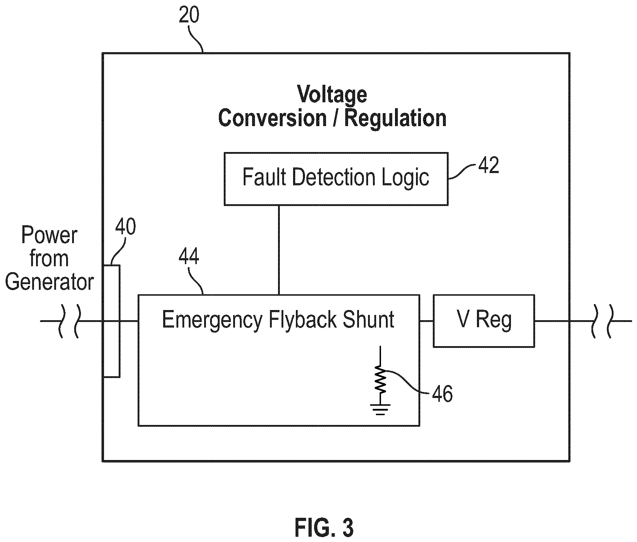

Referring now to FIGS. 2 and 3, during operation of the hybrid propulsion system 10, the generator 14 may enter a fault state where the generator 14 and the generator voltage regulator 20 suffers a rapid unplanned disconnection from the power grid 18, and thus from other components of the hybrid propulsion system 10 such as the motor 22 and fan 24 combinations, and from the other aircraft systems 28. The consequences of such rapid, unplanned disconnection may include the gas turbine engine 12 proceeding to an overspeed condition while an engine control works to accommodate the sudden loss of load on the engine 12. Further, the electrical potential (voltage) of the generator 14 may rapidly spike upward as the generator 14 speed increases as a result of the unloaded condition. This may damage the generator 14, the generator voltage regulator 20 and/or any components or systems that are downstream of the generator 14 and still connected thereto. Either of these may result in permanent damage, or prevent reconnection of the generator 14 to the power grid 18.

To prevent such consequences, the generator voltage regulator 20 includes sensors 40 to monitor the voltage and current incoming from the generator 14 for sudden or abrupt changes outside of an expected or preselected voltage band and current band, which may be expected during normal operation. Voltage and/or current outside of the preselected voltage band and/or the expected current band is indicative of a fault condition such as the sudden disconnection of the generator 14 and the generator voltage regulator 20 from the power grid 18. The generator voltage regulator 20 may use fault detection logic 42 to compare the voltage and current detected by sensors 40 to the preselected voltage band and current band. The detection of the fault triggers a shunt circuit, shown schematically at 44 to connect an emergency load 46 to the gas turbine engine 12. Additionally the fault detection logic 42 may be connected to the system controller 38 to slow the engine 14 as the emergency load 46 is removed and normal operation of the system 10 is restarted.

The hybrid propulsion system 10 may additionally include storage device 32 coupled to the power grid 18 and configured to power the motors 22 and subsequently the fans 24, in the event of an open circuit between the generator 14 and the power grid 18. As such, the hybrid propulsion system 10 may continue to power the aircraft, to enable safe operation in the event of a generator disconnect.

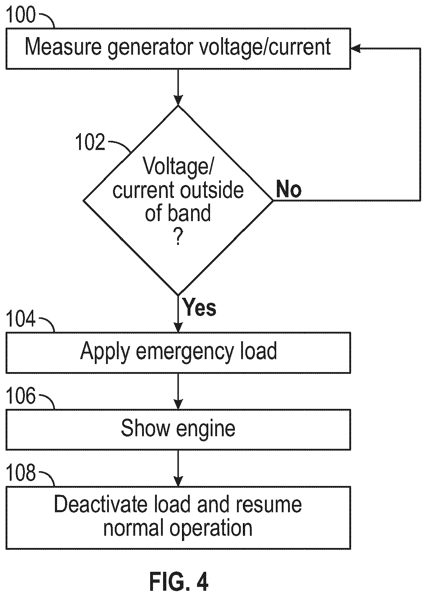

A method of operating the hybrid propulsion system 10 is illustrated in FIG. 4. At step 100, a voltage and/or current from the generator 14 is measured. The fault detection logic 42 compares an incoming voltage and/or current to a preselected voltage band and/or current band at step 102. At step 104, if the voltage and/or current falls outside of the voltage band and/or current band, the fault detection logic 42 triggers application of the emergency load 46 on the engine 12 via the shunt circuit 44. At step 106, the system controller 38 initiates slowing of the gas turbine engine 14 to a preselected lower RPM condition. Once the engine 14 is slowed to the preselected lower RPM condition, the shunt circuit 46 may be deactivated and normal operation of the system 10 resumed at step 108.

Use of the fault detection logic 42 and the shunt circuit 46 provides a more consistent load on the engine 12 in the case of a fault in the generator 14 to aid in resisting engine 12 overspeed and provides a path for the excess energy when the generator 14 is disconnected from the power grid 18. Further, use of the shunt circuit 46 provides time for the system 10 to respond and recover from the rapid disconnect.

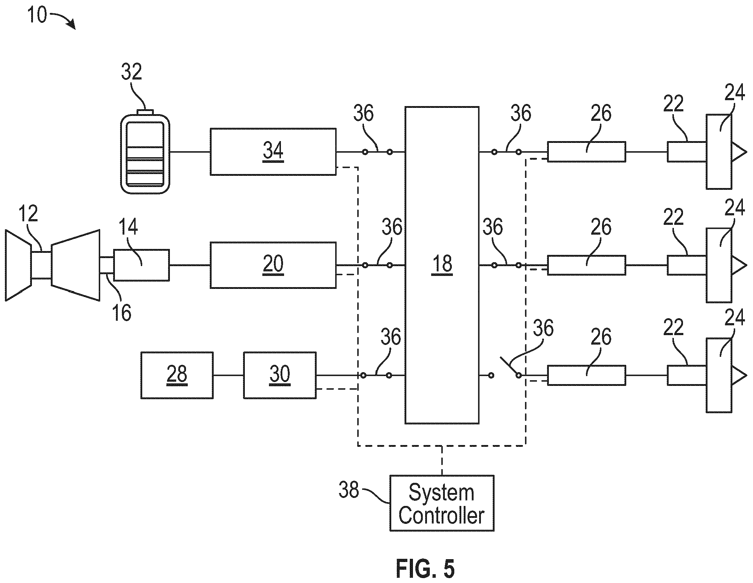

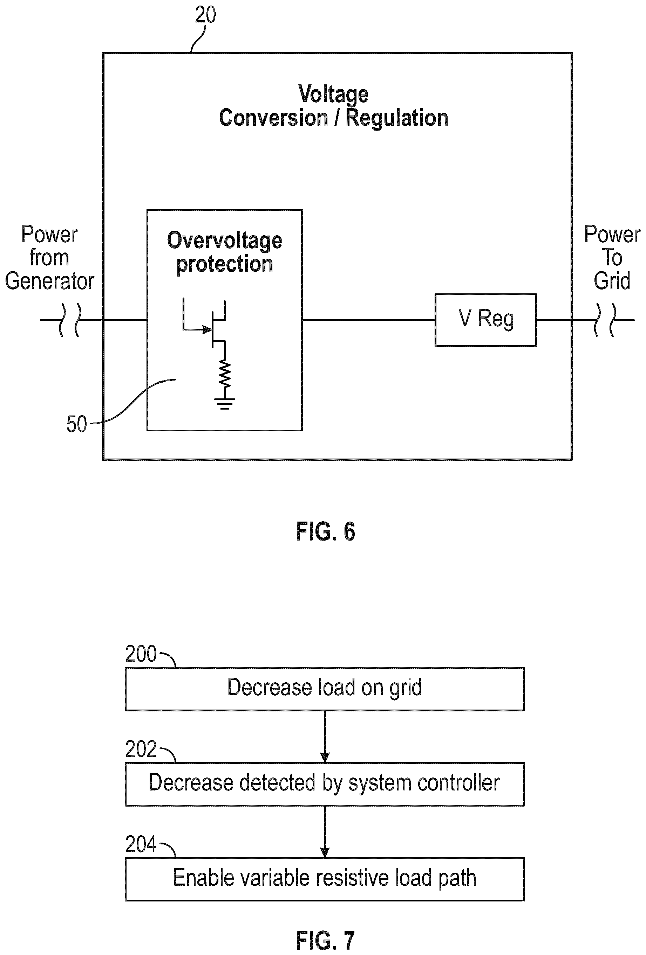

Another embodiment is illustrated in FIGS. 5 and 6, in which under normal or faulted operation, one or more loads, such as one or more of the motor 22 and fan 24 combinations, are disconnected from the power grid 18, resulting in a rapid decrease in overall load on the power grid 18. Such a rapid decrease may lead to a brief overvoltage condition or may unload the gas turbine engine 12 leading to an overspeed condition. A variable resistive load path 50 is provided at the generator voltage regulator 20 to assist the hybrid propulsion system's ability to absorb unused energy during such rapid disconnects or loss of load from the power grid 18. The system controller 38, operably connected at least to the power grid 18 and the generator voltage regulator 20 commands or, in the case of a fault, detects the disconnection of the load from the power grid 18, and enables utilization of the variable resistive load path 50 at the generator voltage regulator 20 to enable a gradual decrease in generator 14 load and prevent generator 14 overvoltage or engine 12 overspeed conditions.

Another method of operating the hybrid propulsion system 10 is illustrated in FIG. 7. At step 200, the load on the power grid 18 is decreased, a decrease which is either commanded or unplanned. At step 202, the system controller 38 detects the rapid decrease in load on the power grid 18. Once the decrease is detected, the system controller 38 communicates with the generator voltage regulator 20 to enable the variable resistive load path 50 at step 204.

Use of the variable resistive load path 50 aids in management of the power grid 18 and allows for a controlled decrease in load on the generator 14 to prevent generator 14 overvoltage and/or engine 12 overspeed conditions.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A series hybrid propulsion system (10) for an aircraft, comprising:
a gas turbine engine (12);
an electrical generator (14) operably connected to the gas turbine engine (12) configured to generate electrical power from operation of the gas turbine engine (12);
one or more electrically-driven propulsors configured to provide propulsion for the aircraft;
an electrical power grid (18) configured to distribute electrical power generated at least at the electrical generator (14) to the one or more electrically-driven propulsors (24); and
a voltage regulator (20) disposed downstream of the electrical generator (14) configured to take one or more actions to compensate for a loss of load on the electrical generator (14).

2. The system of claim 1, wherein the one or more actions includes applying an emergency load to the electrical generator (14).

3. The system of claim 2, wherein the emergency load is applied to the electrical generator (14) when the electrical generator (14) is disconnected from the electrical power grid (18), and/or further comprising a shunt circuit (46) at the voltage regulator (20), wherein the emergency load is applied via the shunt circuit (46) at the voltage regulator (20).

4. The system of claim 1, 2 or 3, wherein the loss of load is determined by measuring one of a current or a voltage at the electrical generator (14).

5. The system of any preceding claim, wherein the one or more actions includes applying a variable resistive load to the electrical generator (14), optionally wherein the variable resistive load is applied to the electrical generator (14) when one or more electrically-driven propulsors are disconnected from the electrical power grid (18).

6. The system of any preceding claim, wherein the one or more electrically-driven propulsors includes a fan (24) and an electric motor (22) configured to drive the fan (24), optionally further comprising a motor controller (26) configured to control operation of the electric motor (22).

7. The system of any preceding claim, further comprising an energy storage system (32) operably connected to the electrical power grid (18) configured to store electrical power generated at the electrical generator (14).

8. A method of operating a series hybrid propulsion system (10) of an aircraft, comprising:
generating electrical power at an electrical generator (14) via operation of a gas turbine engine (12) operably connected to the electrical generator (14);
distributing the electrical power to an electrical power grid (18);
operating one or more electrically-driven propulsors from the electrical power provided to the electrical power grid (18) to provide propulsion for the aircraft;
abruptly reducing a load on the electrical generator (14); and
taking one or more actions at a voltage regulator (20) disposed downstream of the electrical generator (14) to compensate for a loss of load on the electrical generator (14).

9. The method of claim 8, wherein the reduction in load on the electrical generator (14) is due to the electrical generator (14) being disconnected from the electrical power grid (18).

10. The method of claim 8 or 9, wherein the one or more actions includes applying an emergency load to the electrical generator (14), optionally wherein the emergency load is applied via a shunt circuit (46) at the voltage regulator (20).

11. The method of claim 8, 9 or 10, wherein the reduction of load is determined by measuring one of a current or a voltage at the electrical generator (14).

12. The method of any of claims 8 to 11, wherein the reduction in load on the electrical generator (14) is due to one or more electrically-driven propulsors being disconnected from the electrical power grid (18).

13. The method of any of claims 8 to 12, wherein the one or more actions includes applying a variable resistive load to the electrical generator (14).

14. The method of any of claims 8 to 13, wherein the one or more electrically-driven propulsors includes a fan (24) and an electric motor (22) configured to drive the fan (24), the system (10) optionally further comprising a motor controller (26) configured to control operation of the electric motor (22).

15. The method of any of claims 8 to 14, further comprising storing electrical power generated at the electrical generator (14) at an energy storage system (32) operably connected to the electrical power grid (18).
